# FASCICULE DE BREVET EUROPEEN

(11) **EP 3 807 145 B1**
(45) Date de publication et mention de la délivrance du brevet: **31.08.2022**
(21) Numéro de dépôt: 19736772.5
(22) Date de dépôt: 05.06.2019
(51) Int. Cl.: B62M 6/45, B62H 5/08

(54) **SYSTÈME DE DISSUASION DE VOL POUR VÉLO ÉLECTRIQUE UTILISANT LE MOTEUR EN ABSENCE DE BATTERIE**
DIEBSTAHLSICHERES SYSTEM FÜR EIN ELEKTRISCHES FAHRRAD UNTER VERWENDUNG DES MOTORS OHNE BATTERIE
THEFT-DETERRENT SYSTEM FOR ELECTRIC BICYCLE USING THE MOTOR IN THE ABSENCE OF A BATTERY

(30) Priorité: 13.06.2018 FR 1855158
(43) Date de publication de la demande: 21.04.2021
(73) Titulaire: eBikeLabs, 38000 Grenoble (FR)
(72) Inventeur: ALARY, Theophile, 38700 La Tronche (FR); BOSSON, Maël, 38120 Mont-Saint-Martin (FR); MARGUET, Raphaël, 38710 Mens (FR)
(74) Mandataire: de Jong, Jean Jacques
(86) Numéro de dépôt international: PCT/FR2019/051344
(87) Numéro de publication internationale: WO 2019/239034

(56) Documents cités:
- EP-A1- 3 492 356
- CN-B- 103 600 789
- JP-A- 2002 264 860
- JP-A- 2006 273 142

## Description

La présente invention concerne les systèmes de protection contre le vol de véhicules électriques, notamment les vélos électriques. L'invention s'applique plus particulièrement aux véhicules électriques équipés de moteurs triphasés sans roue libre.

Le document JP2006273142 montre un dispositif de dissuasion de vol d'un véhicule électrique connu comprenant:
- un moteur triphasé sans roue libre;
- un étage de puissance configuré pour connecter individuellement les trois phases du moteur à deux lignes d'alimentation;
le dispositif comprenant un circuit de commande configuré pour être alimenté et pour, dès que son niveau d'alimentation est suffisant, commander l'étage de puissance pour connecter continûment deux phases du moteur à une première des lignes d'alimentation. Ce document montre aussi un procédé pour dissuader le vol d'un véhicule électrique à moteur triphasé sans roue libre, comprenant les étapes suivantes dans un mode antivol du véhicule:
- lorsqu'un déplacement du véhicule est détecté, déclencher un freinage en connectant par un circuit de commande des première et deuxième phases du moteur triphasé continûment à une première ligne d'alimentation, d'où il résulte que les première et deuxième phases sont en court-circuit et provoquent un effort de freinage renforcé du moteur;
le dispositif comprenant les étapes suivantes:
- utiliser le moteur dans un mode générateur pour alimenter le circuit de commande dans une phase initiale de mise en rotation du moteur par un déplacement du véhicule; et
- déclencher le freinage lorsque le niveau d'alimentation du circuit de commande atteint un premier seuil.

Pour protéger un vélo électrique contre le vol, il existe le classique antivol à serrure que l'on utilise pour attacher le vélo à un poteau ou du moins immobiliser une roue. Ce type d'antivol a une efficacité limitée en fonction de sa structure, de l'emplacement du vélo, et de la durée d'immobilisation. Selon les conditions de manœuvre qui s'offrent à lui et la valeur apparente du vélo, un voleur trouvera toujours les moyens nécessaires pour briser l'antivol.

Dans le cas d'un vélo électrique, la batterie est généralement amovible, ce qui permet à l'utilisateur de l'emporter, protégeant la valeur élevée de la batterie, et dissuadant sensiblement le vol du vélo.

Malgré cela, un voleur peut quand même briser l'antivol et partir avec le vélo sans batterie.

Pour dissuader davantage le vol d'un vélo électrique, on prévoit de façon générale un procédé pour dissuader le vol d'un véhicule électrique à moteur triphasé sans roue libre, comprenant les étapes consistant à utiliser le moteur dans un mode générateur pour alimenter un circuit de commande du moteur dans une phase initiale de mise en rotation du moteur par un déplacement du véhicule ; et lorsque le niveau d'alimentation du circuit de commande atteint un premier seuil, connecter par le circuit de commande des première et deuxième phases du moteur triphasé continument à une première ligne d'alimentation, d'où il résulte que les première et deuxième phases sont en court-circuit et provoquent un effort de freinage renforcé du moteur.

La troisième phase du moteur peut être connectée pour alimenter le circuit de commande pendant que les première et deuxième phases sont en court-circuit.

Selon l'invnetion, le procédé comprend une étape initiale de retrait d'une batterie amovible du véhicule, d'où il résulte que le circuit de commande est alimenté seulement par la rotation du moteur.

Le procédé peut comprendre en outre les étapes consistant à stocker de l'énergie produite par le moteur dans un condensateur du circuit de commande ; et lorsque le niveau d'alimentation du circuit de commande atteint un deuxième seuil supérieur au premier, connecter par le circuit de commande la troisième phase du moteur à la première ligne d'alimentation, d'où il résulte que les trois phases du moteur sont en court-circuit et la rotation du moteur n'alimente plus le circuit de commande.

Le procédé peut comprendre, lorsque le niveau d'alimentation du circuit de commande diminue vers le premier seuil, une étape de déconnexion de la troisième phase du moteur de la première ligne d'alimentation.

On prévoit également de façon générale un dispositif de dissuasion de vol d'un véhicule électrique, comprenant un moteur triphasé sans roue libre ; une batterie amovible ; un étage de puissance configuré pour connecter individuellement les trois phases du moteur à deux lignes d'alimentation ; et un circuit de commande configuré pour être alimenté par la rotation du moteur en absence de batterie et pour, dès que son niveau d'alimentation est suffisant, commander l'étage de puissance pour connecter continûment deux phases du moteur à une première des lignes d'alimentation.

Le circuit de commande peut en outre être configuré pour connecter la troisième phase du moteur de manière à continuer à alimenter le circuit de commande.

Le circuit de commande peut comprendre un condensateur connecté pour stocker de l'énergie produite par le moteur, et être configuré en outre pour commander l'étage de puissance pour connecter la troisième phase du moteur à la première ligne d'alimentation lorsque le niveau d'alimentation produit par le moteur dépasse un seuil.

Le circuit de commande peut en outre être configuré pour déconnecter la troisième phase du moteur de la première ligne d'alimentation lorsque le niveau d'alimentation disponible dans le condensateur diminue vers un niveau d'alimentation minimal.

Des modes de réalisation seront exposés dans la description suivante, faite à titre non limitatif en relation avec les figures jointes parmi lesquelles :
[Fig.1] représente schématiquement un moteur triphasé de véhicule électrique et une partie de son circuit de commande, dans une première configuration selon l'invention pour dissuader le vol.
[Fig. 2] représente schématiquement la structure de [Fig.1], dans une deuxième configuration plus efficace que la première.

On propose ci-après un système de dissuasion de vol de véhicule électrique utilisant l'énergie produite par le moteur lorsque celui-ci est mis en rotation par un déplacement du véhicule. Le système peut ainsi fonctionner sans batterie, notamment dans le cas des vélos électriques à batterie amovible. De préférence, le moteur est de type triphasé sans roue libre, c'est-à-dire que le moteur est en permanence en prise avec une roue.

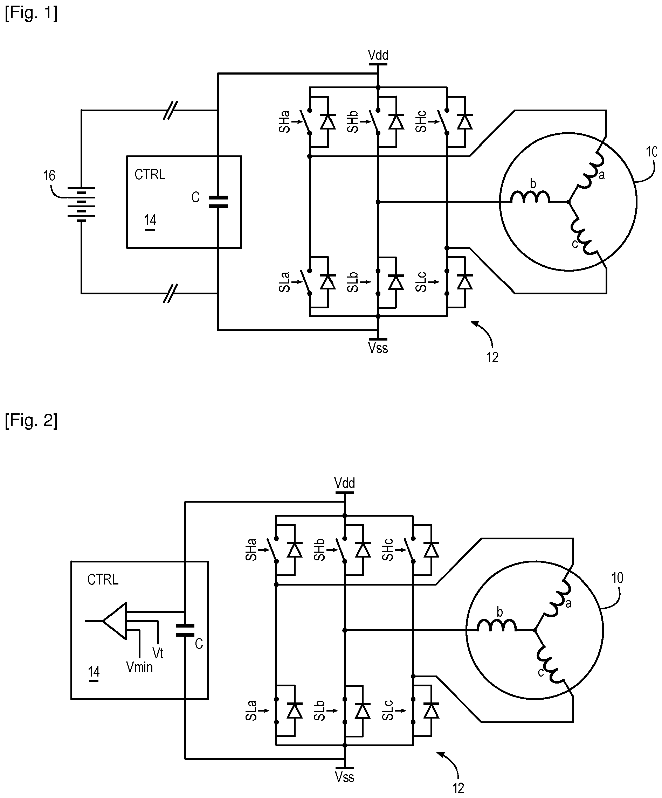

[Fig. 1] représente un schéma électrique simplifié d'un moteur triphasé 10 d'un vélo électrique en association avec un dispositif de commande dont on a seulement représenté des éléments servant à comprendre les modes de réalisation décrits. Les bobinages ou phases a, b, c, du moteur peuvent être disposés en étoile, comme cela est représenté. Le dispositif de commande peut être classique, par exemple à champ orienté, dit FOC.

Le dispositif de commande comprend un étage de puissance 12, généralement des commutateurs électroniques formant un « pont en H ». Chaque phase du moteur est commandée par une paire de commutateurs SH, SL, le premier commutateur reliant la phase à une ligne d'alimentation haute Vdd, et le second reliant la phase à une ligne d'alimentation basse Vss. Les commutateurs associés à une phase sont suffixés par le nom de la phase. Chaque commutateur est en outre muni d'une diode de roue libre, ces diodes assurant une évacuation de courants induits vers une ligne d'alimentation même si les commutateurs sont ouverts.

Un circuit de commande 14 est configuré pour gérer le moteur par l'intermédiaire de l'étage de puissance 12 en fonction de mesures de capteurs et de consignes. Ces éléments sont bien connus de l'homme du métier et ne seront pas décrits plus en détail.

Une batterie rechargeable 16 alimente normalement les différents éléments du dispositif de commande par les lignes Vdd et Vss. Dans le cas d'un vélo électrique, la batterie 16 est généralement amovible. Comme on l'a précédemment indiqué, l'utilisateur aura tendance à retirer la batterie lorsque le vélo est garé dans un lieu public. Dans ce cas, plus rien n'alimente les éléments du dispositif de commande et les commutateurs SH et SL restent tous ouverts.

Ainsi, lorsque le moteur est mis en rotation, par exemple en cas de vol, celui-ci agit en mode générateur et produit des tensions alternatives aux bornes de ses phases. Si la rotation est suffisamment rapide, ces tensions sont suffisamment élevées pour être redressées par les diodes de l'étage de puissance et alimentent ainsi le circuit de commande 14.

Un circuit de commande classique, même suffisamment alimenté dans ces conditions, n'entreprend aucune action, car il ne reçoit aucune consigne.

Selon un mode de réalisation, le circuit de commande est configuré pour être en mode antivol dans ces conditions. Ce mode peut être actif systématiquement dès que la batterie est retirée, ou programmé à la demande par l'utilisateur lorsque la batterie est encore en place, par exemple dans une mémoire non-volatile du circuit de commande, à l'aide d'une console de commande du vélo ou sans fil par une application dédiée sur un smartphone.

Dans ce mode antivol, dès que le circuit de commande est suffisamment alimenté, il commande l'étage de puissance pour court-circuiter continûment deux des trois phases du moteur. Pour cela deux phases quelconques sont connectées à l'une des lignes Vdd et Vss par deux commutateurs SH ou SL. Comme cela est représenté à titre d'exemple, les phases b et c sont connectées à la ligne Vss par la fermeture continue des commutateurs SLb et SLc.

Ainsi, les courants induits dans les phases b et c par la rotation du moteur sont maximisés et produisent un important effet de freinage électromagnétique, effet qui augmente avec la vitesse de rotation du moteur. Alors que deux des phases servent ainsi au freinage, la troisième phase, qui reste ouverte, sert à maintenir l'alimentation du circuit de commande pour assurer la continuité du freinage, à savoir maintenir la fermeture des commutateurs SLb et SLc.

L'effet de freinage augmente avec la vitesse de rotation, de sorte qu'un voleur voulant s'échapper sur le vélo, généralement le plus vite possible, finit par s'essouffler rapidement et à renoncer à son exploit, laissant le vélo non loin du lieu de garage initial. Si le vélo est équipé d'un traceur GPS, celui-ci peut être alimenté en même temps que le circuit de commande, et ainsi indiquer le lieu où le voleur a laissé le vélo.

Si le voleur parvient à maintenir une vitesse suffisante, l'énergie produite par la phase ouverte (a) peut être excédentaire par rapport à celle requise pour alimenter le circuit de commande. Cette énergie peut être stockée dans un condensateur C de capacité élevée, ou un super-condensateur.

[Fig. 2] illustre une configuration augmentant la force de freinage en tirant partie de l'énergie stockée dans le condensateur C.

Le circuit de commande 14 est configuré pour mesurer le niveau de charge du condensateur C, par exemple en comparant la tension de charge à une valeur seuil Vt. Lorsque le seuil Vt est dépassé, le circuit de commande court-circuite les trois phases du moteur, par exemple en fermant tous les commutateurs SL, comme cela est représenté. Alors, les trois phases du moteur contribuent au freinage, augmentant de 50 % la force de freinage par rapport à la configuration de [Fig. 1].

Le circuit de commande est alors alimenté seulement par la charge contenue dans le condensateur C. Lorsque la tension de charge du condensateur C diminue à la limite minimale Vmin d'alimentation du circuit de commande, celui-ci libère l'une des phases du moteur en ouvrant le commutateur correspondant, pour maintenir le niveau d'alimentation du circuit de commande. Le dispositif retrouve alors la configuration de [Fig. 1].

Si, dans la configuration de [Fig. 1], l'énergie produite par l'unique phase ouverte du moteur ne suffit pas à alimenter le circuit de commande, le circuit de commande cesse inévitablement de fonctionner. Il en résulte que tous les commutateurs SH et SL s'ouvrent naturellement, ce qui libère les trois phases du moteur. Le condensateur C étant alors chargé par trois phases au lieu d'une, le niveau de charge augmente rapidement pour atteindre le niveau d'alimentation minimale du circuit de commande, qui repasse alors dans la configuration de [Fig. 1].

Dans certaines conditions, le circuit de commande peut être configuré pour passer directement à la configuration de [Fig. 2] lorsqu'il est suffisamment alimenté. Alors, au lieu d'alterner entre une phase de freinage moyen mais permettant d'alimenter le circuit de commande ([Fig. 1]) et une phase de freinage fort ([Fig. 2]), le système alterne entre une phase dépourvue de freinage mais rechargeant rapidement le condensateur C, et une phase de freinage fort jusqu'à la décharge du condensateur. Ce dernier mode opératoire peut produire une force de freinage moyenne plus élevée que le premier mode lorsque le circuit de commande consomme très peu de courant, en d'autres termes lorsque les phases de recharge durent peu de temps par rapport aux phases de freinage.

Le système de dissuasion de vol décrit ci-dessus est particulièrement bien adapté aux moteurs sans roue libre, car, le moteur étant toujours en prise avec une roue, le système fonctionne aussi lorsque le vélo est poussé.

## Revendications

1. [Procédé pour dissuader le vol d'un véhicule électrique à moteur triphasé sans roue libre (10), comprenant les étapes suivantes dans un mode antivol du véhicule :
• lorsqu'un déplacement du véhicule est détecté, déclencher un freinage en connectant par un circuit de commande des première et deuxième phases (b, c) du moteur triphasé continument à une première ligne d'alimentation (Vss), d'où il résulte que les première et deuxième phases sont en court-circuit et provoquent un effort de freinage renforcé du moteur ;
le procédé comprenant les étapes suivantes :
• une étape initiale de retrait d'une batterie amovible (16) du véhicule, d'où il résulte que le circuit de commande est alimenté seulement par la rotation du moteur;
• utiliser le moteur dans un mode générateur pour alimenter le circuit de commande (14) dans une phase initiale de mise en rotation du moteur par un déplacement du véhicule ; et
• déclencher le freinage lorsque le niveau d'alimentation du circuit de commande atteint un premier seuil (Vmin).

2. Procédé selon la revendication 1, dans lequel la troisième phase du moteur est connectée pour alimenter le circuit de commande pendant que les première et deuxième phases sont en court-circuit.

3. Procédé selon la revendication 2, comprenant en outre les étapes suivantes :
• stocker de l'énergie produite par le moteur dans un condensateur (C) du circuit de commande ; et
• lorsque le niveau d'alimentation du circuit de commande atteint un deuxième seuil (Vt) supérieur au premier, connecter par le circuit de commande la troisième phase (a) du moteur à la première ligne d'alimentation (Vss), d'où il résulte que les trois phases du moteur sont en court-circuit et la rotation du moteur n'alimente plus le circuit de commande.

4. Procédé selon la revendication 3, comprenant, lorsque le niveau d'alimentation du circuit de commande diminue vers le premier seuil (Vmin), une étape de déconnexion de la troisième phase (a) du moteur de la première ligne d'alimentation (Vss).

5. Dispositif de dissuasion de vol d'un véhicule électrique, comprenant :
• un moteur triphasé sans roue libre (10) ;
• une batterie amovible (16) ;
• un étage de puissance (12) configuré pour connecter individuellement les trois phases du moteur à deux lignes d'alimentation ; et
le dispositif comprenant un circuit de commande (14) configuré pour être alimenté par la rotation du moteur en absence de batterie et pour, dès que son niveau d'alimentation est suffisant, commander l'étage de puissance pour connecter continument deux phases du moteur (b, c) à une première des lignes d'alimentation (Vss).

6. Dispositif selon la revendication 5,
dans lequel le circuit de commande est en outre configuré pour connecter la troisième phase du moteur de manière à continuer à alimenter le circuit de commande.

7. Dispositif selon la revendication 6,
dans lequel le circuit de commande comprend un condensateur (C) connecté pour stocker de l'énergie produite par le moteur, et est en outre configuré pour commander l'étage de puissance (12) pour connecter la troisième phase du moteur à la première ligne d'alimentation lorsque le niveau d'alimentation produit par le moteur dépasse un seuil (Vt).

8. Dispositif selon la revendication 7,
dans lequel le circuit de commande est en outre configuré pour déconnecter la troisième phase du moteur de la première ligne d'alimentation lorsque le niveau d'alimentation disponible dans le condensateur diminue vers un niveau d'alimentation minimal (Vmin).

## Patentansprüche

1. Verfahren zum Sichern vor dem Diebstahl eines Elektrofahrzeugs (10) mit Dreiphasenmotor ohne Freilauf, das die folgenden Schritte in einem Anti-Diebstahl-Modus des Fahrzeugs umfasst:
• wenn eine Bewegung des Fahrzeugs erfasst wird, Auslösen einer Bremsung bei einem kontinuierlichen Verbinden der ersten und der zweiten Phase (b, c) des Dreiphasenmotors durch einen Steuerkreis mit einer ersten Antriebsleitung (Vss), woraus resultiert, dass die erste und die zweite Phase kurzgeschlossen sind und eine verstärkte Bremskraft des Motors bewirken;
wobei das Verfahren die folgenden Schritte umfasst:
• einen anfänglichen Schritt eines Entfernens einer abnehmbaren Batterie (16) aus dem Fahrzeug, woraus resultiert, dass der Steuerkreis nur durch die Drehung des Motors angetrieben wird;
• Verwenden des Motors in einem Generatormodus, um den Steuerkreis (14) in einer Anfangsphase der Motordrehung durch eine Bewegung des Fahrzeugs anzutreiben; und
• Auslösen der Bremsung, wenn der Antriebspegel des Steuerkreises einen ersten Schwellenwert (Vmin) erreicht.

2. Verfahren nach Anspruch 1, wobei die dritte Phase des Motors verbunden ist, um den Steuerkreis anzutreiben, während die erste und die zweite Phase kurzgeschlossen sind.

3. Verfahren nach Anspruch 2, das ferner die folgenden Schritte umfasst:
• Speichern der durch den Motor erzeugten Energie in einem Kondensator (C) des Steuerkreises; und
• wenn der Antriebspegel des Steuerkreises einen zweiten Schwellenwert (Vt) erreicht, der höher als der erste ist, Verbinden der dritten Phase (a) des Motors durch den Steuerkreis mit der ersten Antriebsleitung (Vss), woraus resultiert, dass die drei Phasen des Motors kurzgeschlossen sind und die Drehung des Motors den Steuerkreis nicht mehr antreibt.

4. Verfahren nach Anspruch 3, das, wenn der Antriebspegel des Steuerkreises auf den ersten Schwellenwert (Vmin) abfällt, einen Schritt eines Trennens der dritten Phase (a) des Motors von der ersten Antriebsleitung (Vss) umfasst.

5. Diebstahlsicherungsvorrichtung für ein Elektrofahrzeug, die Folgendes umfasst:
• einen dreiphasigen Motor ohne Freilauf (10);
• eine abnehmbare Batterie (16);
• eine Leistungsstufe (12), die konfiguriert ist, um die drei Phasen des Motors mit zwei Antriebsleitungen einzeln zu verbinden; und
wobei die Vorrichtung einen Steuerkreis (14) umfasst, der konfiguriert ist, um durch die Drehung des Motors in Abwesenheit der Batterie angetrieben zu werden, und, sobald sein Antriebspegel ausreichend ist, die Leistungsstufe zu steuern, um zwei Phasen des Motors (b, c) mit einer ersten der Antriebsleitungen (Vss) kontinuierlich zu verbinden.

6. Vorrichtung nach Anspruch 5, wobei der Steuerkreis ferner konfiguriert ist, um die dritte Phase des Motors zu verbinden, so dass der Steuerkreis weiterhin angetrieben wird.

7. Vorrichtung nach Anspruch 6, wobei der Steuerkreis einen Kondensator (C) umfasst, der verbunden ist, um die durch den Motor erzeugte Energie zu speichern, und ferner konfiguriert ist, um die Leistungsstufe (12) zu steuern, um die dritte Phase des Motors mit der ersten Antriebsleitung zu verbinden, wenn der durch den Motor erzeugte Antriebspegel einen Schwellenwert (Vt) überschreitet.

8. Vorrichtung nach Anspruch 7, wobei der Steuerkreis ferner konfiguriert ist, um die dritte Phase des Motors von der ersten Antriebsleitung zu trennen, wenn der Antriebspegel, der in dem Kondensator vorhanden ist, auf einen minimalen Antriebspegel (Vmin) abfällt.

## Claims

1. A method for deterring theft of a vehicle having a three-phase electric motor without a freewheel function (10), comprising the following steps in a vehicle anti-theft mode:
when a motion of the vehicle is detected, triggering a braking by connecting by a control circuit first and second phases (b, c) of the three-phase motor continuously to a first supply line (Vss), whereby the first and second phases are short-circuited and cause an increased braking force of the motor;
the method comprising the following steps:
an initial step of removing a removable battery (16) from the vehicle, whereby the control circuit is powered only by the rotation of the motor;
using the motor in a generator mode to supply power to the control circuit (14) in an initial phase of motor rotation caused by motion of the vehicle; and
triggering braking when the power supply level of the control circuit reaches a first threshold (Vmin).

2. The method according to claim 1, wherein the third phase of the motor is connected to supply power to the control circuit while the first and second phases are short-circuited.

3. The method according to claim 2, further comprising the following steps:
storing energy produced by the motor in a capacitor (C) of the control circuit; and
when the supply level of the control circuit reaches a second threshold (Vt) higher than the first, connecting the third phase (a) of the motor to the first supply line (Vss) via the control circuit, whereby the three phases of the motor are short-circuited and the rotation of the motor no longer supplies power to the control circuit.

4. The method according to claim 3, comprising, when the power supply level of the control circuit decreases to the first threshold (Vmin), a step of disconnecting the third phase (a) of the motor from the first power supply line (Vss).

5. A theft deterrent device for an electric vehicle, comprising:
a three-phase motor without a freewheel (10);
a removable battery (16);
a power stage (12) configured to individually connect the three phases of the motor to two supply lines; and
the device comprising a control circuit (14) configured to be powered by the rotation of the motor in the absence of a battery and to, as soon as its power level is sufficient, control the power stage to continuously connect two phases of the motor (b, c) to a first of the supply lines (Vss).

6. The device according to claim 5, wherein the control circuit is further configured to connect the third phase of the motor to continue to supply power to the control circuit.

7. The device according to claim 6, wherein the control circuit comprises a capacitor (C) connected to store energy produced by the motor, and is further configured to control the power stage (12) to connect the third phase of the motor to the first supply line when the power level produced by the motor exceeds a threshold (Vt).

8. The device according to claim 7, wherein the control circuit is further configured to disconnect the third phase of the motor from the first power supply line when the supply level available in the capacitor decreases to a minimum supply level (Vmin).
